# EUROPEAN PATENT APPLICATION

(11) **EP 1 686 805 A2**
(43) Date of publication of application: **02.08.2006**
(21) Application number: 06001621.9
(22) Date of filing: 26.01.2006
(51) Int. Cl.: H04N 7/16

(54) **Broadcasting terminal and viewing method**

(30) Priority: 27.01.2005 KR 2005007777
(71) Applicant: LG Electronics Inc., Yongdungpo-Gu Seoul (KR)
(72) Inventor: Han, Sang-Youn, Geumcheon-Gu Seoul (KR); Cho, Nam-Shin, Dongjak-Gu Seoul (KR); Hong, Sug-Ky, Seocho-Gu Seoul (KR)
(74) Representative: Katérle, Axel

(57) **Abstract**

A multimedia terminal comprises a receiver adapted to receive a multimedia signal from a network transmitter, the multimedia signal including a transmitter identifier corresponding to the network transmitter. The multimedia terminal also comprises a processor operatively coupled to the receiver, adapted to evaluate the transmitter identifier included in the multimedia signal. The multimedia terminal also comprises a multimedia processor operatively coupled to the receiver and the processor, adapted to process the multimedia signal based on the evaluation of the transmitter identifier by the processor. The evaluation of the transmitter identifier by the processor comprises determining whether the transmitter identifier may correspond to a fee-based transmitter. The multimedia terminal may further comprise a display operatively coupled to the multimedia processor, adapted to display a multimedia service associated with the multimedia signal based on the evaluation of the transmitter identifier by the processor.

## Description

### FIELD OF THE INVENTION

The present invention relates generally to a broadcasting terminal and, more particularly, to a broadcasting terminal and viewing method.

### BACKGROUND OF THE INVENTION

A broadcasting terminal (terminal) receives multimedia information and/or data while the terminal is in motion. Types of multimedia services include DMB (digital multimedia broadcasting), DVB-H (digital video broadcasting handheld), and Media-Flo (media-forward link only).

The DMB refers to a broadcasting service that provides various multimedia signals in digital form, including high-quality audio and video, to a broadcasting terminal that has a DMB receiver. The broadcasting terminal may be embodied in a personal digital assistant (PDA) or a terminal for a motor vehicle. The DMB is classified into satellite DMB (SDMB) and terrestrial DMB (TDMB) according to how the radio waves carrying digital broadcast data are transmitted.

Terrestrial DMB systems are often used to provide subscription-free broadcasts, because TDMB may be implemented at a relatively low cost, compared to SDMB. TDMB uses radio waves in the 200 MHz band to provide a large broadcast destination zone with respect to the features of the corresponding radio waves. However, areas of obstructed reception, called 'shadow areas' (e.g., underground areas, valleys and/or areas surrounded by buildings) may exist. Therefore, 'gapfiller' transmitters (gapfillers) are installed to enhance the reception sensitivity of a broadcasting terminal in shadow areas and the viewability of terrestrial DMB.

However, use of gapfillers increases costs to the service provider, due to costs associated with installation, management, and maintenance of the gapfillers.

### SUMMARY OF THE INVENTION

Accordingly, the present invention is directed to a broadcasting terminal and viewing method that substantially obviates one or more problems due to limitations and disadvantages of the related art.

An object of the present invention is to provide multimedia service to a broadcasting terminal, while enabling the provider of the multimedia service to charge a fee for the provision of the multimedia service to the broadcasting terminal, based on the manner of transmission of the multimedia service.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in one embodiment, a multimedia terminal comprises a receiver adapted to receive a multimedia signal from a network transmitter, the multimedia signal including a transmitter identifier corresponding to the network transmitter. The multimedia terminal also comprises a processor operatively coupled to the receiver, adapted to evaluate the transmitter identifier included in the multimedia signal. The multimedia terminal also comprises a multimedia processor operatively coupled to the receiver and the processor, adapted to process the multimedia signal based on the evaluation of the transmitter identifier by the processor.

The evaluation of the transmitter identifier by the processor comprises determining whether the transmitter identifier may correspond to a fee-based transmitter. The multimedia terminal may further comprise a display operatively coupled to the multimedia processor, adapted to display a multimedia service associated with the multimedia signal based on the evaluation of the transmitter identifier by the processor. The processing by the multimedia processor of the multimedia signal based on the evaluation of the transmitter identifier by the processor may comprise notifying a user of the multimedia terminal that display of the multimedia service associated with the multimedia signal requires fee payment when the transmitter identifier corresponds to a fee-based transmitter.

The network transmitter may comprise a gapfiller transmitter. Alternatively, the network transmitter may comprise a broadcasting station. The multimedia terminal may further comprise a user input device operatively coupled to the processor, adapted to receive user input to control the multimedia terminal. The multimedia terminal may further comprise a transmitter unit operatively coupled to the processor, adapted to transmit a signal from the multimedia terminal to a network.

In another embodiment, a broadcasting network comprises a broadcasting station adapted to broadcast a multimedia signal. The broadcasting network also comprises a transmitter adapted to receive the multimedia signal from the broadcasting station, to attach a transmitter identifier to the multimedia signal to generate a marked multimedia signal, and to transmit the marked multimedia signal to a multimedia terminal.

The multimedia terminal may evaluate the transmitter identifier included in the marked multimedia signal, and determines whether to display a multimedia service associated with the marked multimedia signal based on the evaluation of the transmitter identifier. The broadcasting network may further comprise a management server adapted to perform authentication of the multimedia terminal to enable display of the multimedia service by the multimedia terminal. The transmitter may comprise a gapfiller transmitter. The transmitter identifier may comprise position information of the transmitter.

In yet another embodiment, a method for processing a multimedia signal in a multimedia terminal comprises receiving a multimedia signal from a network transmitter, the multimedia signal including a transmitter identifier corresponding to the network transmitter. The method also comprises evaluating the transmitter identifier included in the multimedia signal The method also comprises processing the multimedia signal based on the evaluation of the transmitter identifier by the processor.

The evaluation of the transmitter identifier by the processor may comprise determining whether the transmitter identifier corresponds to a fee-based transmitter. The method may further comprise displaying a multimedia service associated with the multimedia signal based on the evaluation of the transmitter identifier by the processor. The processing by the multimedia processor of the multimedia signal based on the evaluation of the transmitter identifier by the processor may comprise notifying a user of the multimedia terminal that display of the multimedia service associated with the multimedia signal requires fee payment when the transmitter identifier corresponds to a fee-based transmitter. The method may further comprise measuring a time during which the multimedia service associated with the multimedia signal transmitted from a fee-based transmitter is displayed on the multimedia terminal. The method may further comprise charging the user of the multimedia terminal for the display of the multimedia service based on the measured display time. The method may further comprise updating authentication information for the multimedia terminal to enable the display of the multimedia service.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.

FIG. 1 is a diagram illustrating assignment of a transmitter identifier (ID) in a broadcasting system.

FIG. 2 is a diagram illustrating a broadcasting system, according to an embodiment of the present invention.

FIG. 3 is a block diagram illustrating a mobile station having a digital multimedia terminal (e.g., broadcasting terminal), according to an embodiment of the present invention.

FIG. 4 is a block diagram illustrating a broadcasting terminal, according to another embodiment of the present invention.

FIG. 5 is a diagram illustrating a structure of a transmitter identification information (TII) packet, according to an embodiment of the present invention.

FIG. 6 is a flow diagram illustrating a viewing method for a broadcasting terminal, according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

A broadcasting terminal is a multimedia terminal. The broadcasting terminal may be embodied in a mobile station having a digital multimedia terminal. The mobile station may be a mobile phone, handset, PDA (personal digital assistant), computer, or other device with wireless communication capabilities. A broadcasting terminal and viewing method is described below. Although a terrestrial DMB system and viewing method are described the techniques of the present invention are applicable to any type of multimedia broadcasting, such as DVB-H (digital video broadcasting handheld) and Media-Flo (media-forward link only), for example.

The present invention provides a multimedia service to a broadcasting terminal, while enabling the provider (e.g., transmitter administrator) of the multimedia service to charge a fee for the provision of the multimedia service to the broadcasting terminal, based on the manner of transmission of the multimedia service. A transmitter identifier is assigned to each transmitter (e.g., terrestrial DMB transmitter) so that a fee may be charged to the user of the broadcasting terminal for provision of the multimedia (e.g., DMB) services from a fee-based transmitter.

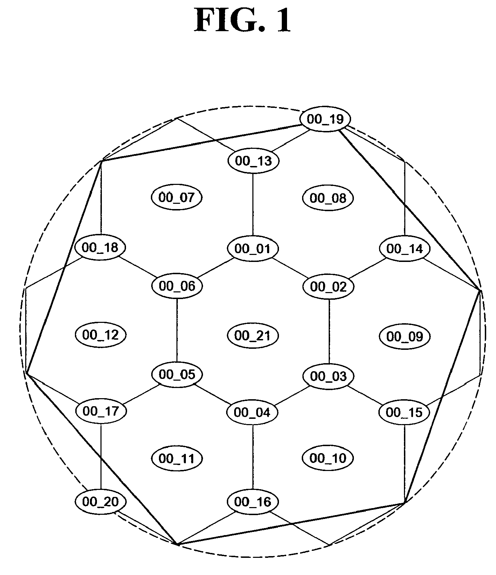

FIG. 1 is a diagram illustrating assignment of a transmitter identifier (ID) in a broadcasting system.

Referring to FIG. 1, a cell has a plurality of transmitters, and each transmitter is allocated a specific identifier (e.g., transmitter identification information or TII) in the form of a plurality of subclasses comprising a main ID and a sub ID. That is, each transmitter is allocated a TII, for example, a TII of the format "00_xx" may be allocated to each transmitter to distinguish the transmitters located at each cell from the transmitters of other cells, for example. As illustrated in FIG. 1, in the TII "00_13", the "00" is a main ID of 7 bits representing TII of a broadcasting station, and "13" is a sub ID of 5 bits representing TII of transmitters in the area of the corresponding broadcasting station, for example.

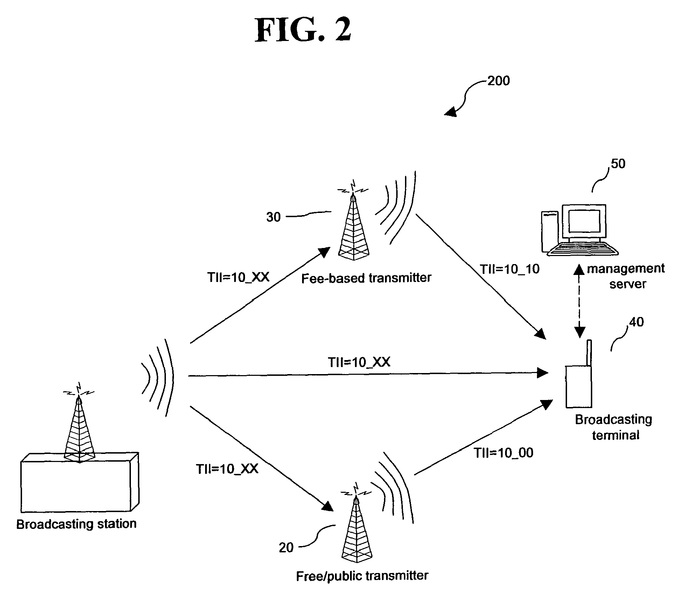

FIG. 2 is a diagram illustrating a broadcasting system 200, according to an embodiment of the present invention.

Referring to FIG. 2, the broadcasting system 200 includes a broadcasting station 10 for transmitting a predetermined broadcast signal, and transmitters 20 and 30 adapted to insert a corresponding TII to a broadcast while relaying the broadcast signal transmitted from the broadcasting station to a broadcasting terminal 40. The broadcasting terminal 40 may be restricted in viewing of the multimedia services based on the TII of the transmitter. The broadcasting system 200 also includes a management server 50 adapted to determine whether the broadcast received from the transmitter is viewable in the terminal.

The transmitters 20 and 30 may function as gapfillers, for example. The transmitter 20 may be a free and public gapfiller, for example. The transmitter 30 may be fee-based gapfiller. The transmitter 30 is preferably adapted to include a TII that enables restriction of viewing. The transmitter 20 may or may not have a TII.

Operation of the broadcasting system 200 is described with reference to FIG. 2, below. When a broadcasting station 10 broadcasts a DMB signal that includes a TII corresponding to the broadcasting station 10, the broadcasted signal is transmitted to the broadcasting terminal 40. Alternatively, the signal is transmitted to the transmitters 20 and 30 to amplify and filter the signal, attach the TII corresponding to the respective transmitter, and transmit the TII to the broadcasting terminal, if the signal is weak or mixed with noise. The free and public transmitter 20 may amplify and transmit the signal to the terminal 40 if the signal received from the broadcasting station 10 is weak, for example. The fee-based transmitter 30 may receive the signal from the broadcasting station and transmit the signal to the broadcasting terminal when the terminal is in a shadow area where the terminal may not directly receive the signal from the broadcasting station 10. The free and public transmitter 20 and/or the fee-based transmitter 30 are allocated a transmitter identifier (e.g., TII) to enable each transmitter to be distinguished from transmitters of other cells, for example. The transmitter identifier may be indicated as "00_xx", where "00" is an identifier as a main ID of 7 bits representing location information of the broadcasting station, and "xx" is an identifier as a sub ID of 5 bits representing location information of the transmitters in the area of the corresponding broadcasting station, for example. As stated above, the respective transmitters are identified by allocating a transmitter identifier using a main ID and a sub ID for each transmitter.

When the signal transmitted from the broadcasting station is transmitted to the free and public transmitter 20, the free and public transmitter 20 attaches the TII allocated to the transmitter to the Null-symbol (e.g., "00") of the signal and transmits the signal to the terminal 40. The terminal confirms that the signal being serviced from the transmitter 20 is free of charge by analyzing the TII transmitted from the free and public transmitter 20, and displays the service associated with the signal to the user.

If the terminal 40 is unable to receive directly from the broadcasting station 10 or the free and public transmitter 20 but instead receives service from the fee-based transmitter 30, because it is in a shadow area, the fee-based transmitter 30 attaches the corresponding TII to the Null-symbol of the signal received from the broadcasting station and transmits the signal to the terminal 40. Thus, the broadcasting terminal 40 is informed that the signal currently being serviced from the fee-based transmitter 30 requires payment of a fee. Thus, when receiving the service from the fee-based transmitter, the terminal may view the multimedia service only with payment of the appropriate fee. Furthermore, if the service is not paid for, the terminal may direct the user regarding how to pay to view the service, via user authentication, for example. The user authentication may be acquired from the fee-based transmitter via a communication network. To this end, the terminal may access a fee-based transmitter management server 50, and the management server may permit viewing of the received broadcast by the terminal.

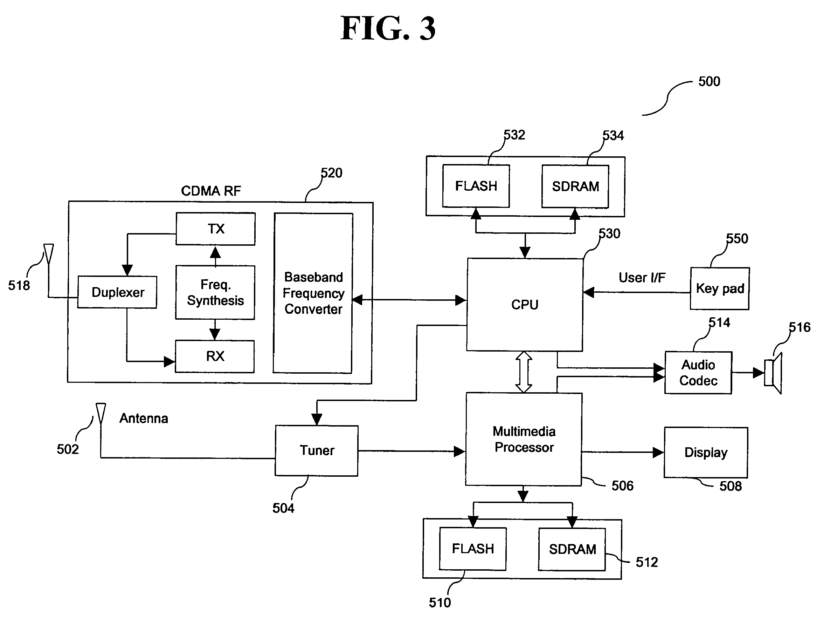

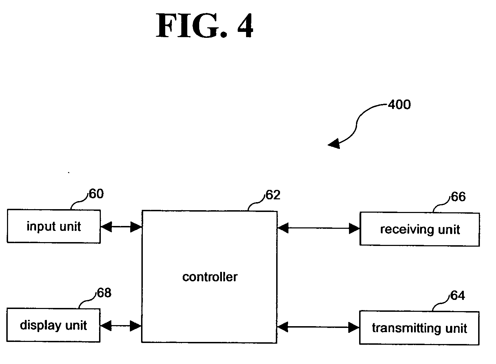

FIG. 3 is a block diagram illustrating a mobile station 500 having a digital multimedia terminal (e.g., broadcasting terminal), according to an embodiment of the present invention. FIG. 4 is a block diagram illustrating a broadcasting terminal 400, according to another embodiment of the present invention.

Referring to FIG. 3, the mobile communication terminal 500 comprises one or more antennas 502 for receiving radio frequency signals from a cellular base station and multimedia signals from broadcast station. A multimedia antenna 502 is operationally connected to a tuner 504 that may be connected to a code division multiplexing (CDM) demodulator. The output of the tuner 504 is operationally connected to a multimedia processor or controller 506 that performs necessary signal processing to display video images through a display 508 and/or output audio signals to a speaker 516 through an audio codec 514. The processor 506 is connected to flash memory 510 and RAM 512 for storing and retrieving data.

Further referring to a cellular section of FIG. 3, a radio antenna 518 is operationally connected to an RF unit 520. The RF unit 520 may be configured to receive/transmit and process CDMA and/or GSM signals. The output of the RF unit 520 is connected to a central processing unit 530 that processes data signals from and to the RF unit 520 and processes user interface data received from a user input device (e.g., keypad) 550 or other input devices. The CPU 530 is connected to flash memory 532 and RAM 534 for storing and retrieving data. The CPU 530 and the multimedia processor 506 are operationally connected to each other to communicate processing data. Preferably, the multimedia processor 506 is designed for processing multimedia signals whereas the CPU 530 controls the entire operation of the mobile communication terminal 500. Although two separate flash memories and RAM are illustrated, they can be combined so that both CPU 530 and the multimedia processor 506 may retrieve/store the data in the same flash memory and RAM.

Referring to FIG. 4, the broadcasting terminal 400 includes an input unit 60 for receiving a command for selecting a broadcasting reception mode, and a controller 62 for converting a mode of the broadcasting terminal into a broadcasting reception mode by using the inputted command, and analyzing and controlling a signal received through a receiving unit 66. The broadcasting terminal also includes a transmitting unit 64 for transmitting a command to connect to a corresponding server 50 (See FIG. 2) according to the controlled signal, and a display unit 68 for displaying broadcasting data received through the receiving unit 66 when a user authentication is performed by the server 50. The controller 62 may include a module for measuring a duration that broadcasting data transmitted from the transmitting unit 64 is displayed, and for transmitting a message including the measured time to the transmitter management server (e.g., server) 50 in order to charge a fee.

Referring again to FIG. 4, a broadcasting viewing mode is selected, and then signals (or data) are received from transmitters for transmitting broadcasting data to the mobile terminal. The controller 62 then analyzes the received signals to check whether the received signals are transmitted from pay transmitters or charge-free transmitters. Based on the check, if the signals are transmitted from charge-free transmitters, the controller 62 displays the broadcasting data transmitted from the charge-free transmitters on the display unit 68. However, if the signals are transmitted from the pay transmitters, then the controller 62 checks for authentication information that allows the broadcasting to be viewed. Based on the check for authentication information, if the authentication information is not found, the broadcasting terminal accesses the transmitter management server of a corresponding transmitter (e.g., a pay transmitter). The transmitter management server then provides details for charging and authentication. The user may then select an authentication to purchase a usage right. The controller 62 may then allow the broadcasting data transmitted from the transmitter to be displayed on the display unit 68.

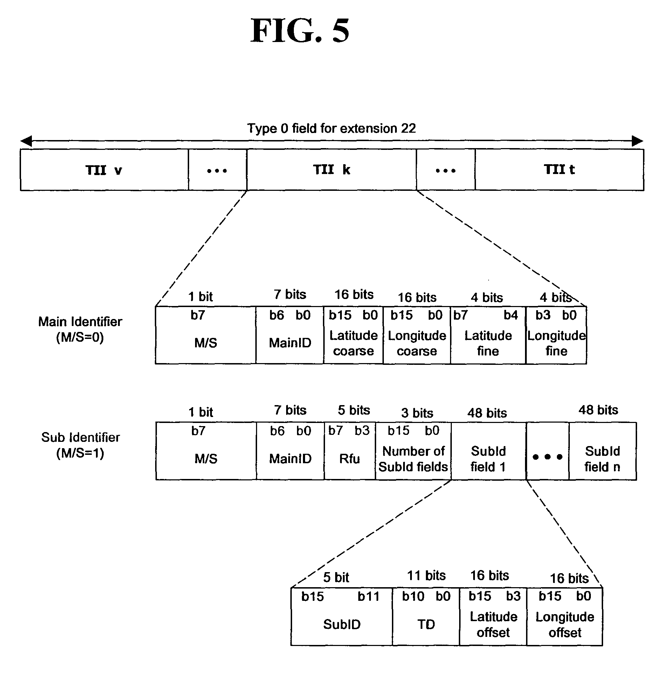

FIG. 5 is a diagram illustrating a structure of a transmitter identification information (TII) packet, according to an embodiment of the present invention.

Referring to FIG. 5, a TII packet includes a main identifier (MainID) and a sub-identifier (SubID). The MainID includes a corresponding MainID to provide information pertaining to a transmitting mode, a latitude coarse to provide coarse latitude information, a longitude coarse to provide coarse longitude information, a latitude fine to provide a latitude offset, and a longitude fine to provide a longitude offset. The SubID is composed of 7 bits, includes a corresponding MainID to indicate a main identifier, a field reserved for future use (Rfu) containing a list of SubID fields, a number of SubID fields containing the total number of SubID fields and SubID fields containing a SubID, a time delay (TD), a latitude offset, and a longitude offset.

Each transmitter is allocated a MainID and a SubID to be distinguishable from each other. A transmitter identifier may be allocated to a Null symbol sector (e.g., a MainID inside each MainID and SubID). Latitude and longitude information that indicates a position where each transmitter is installed may be provided in a service information field.

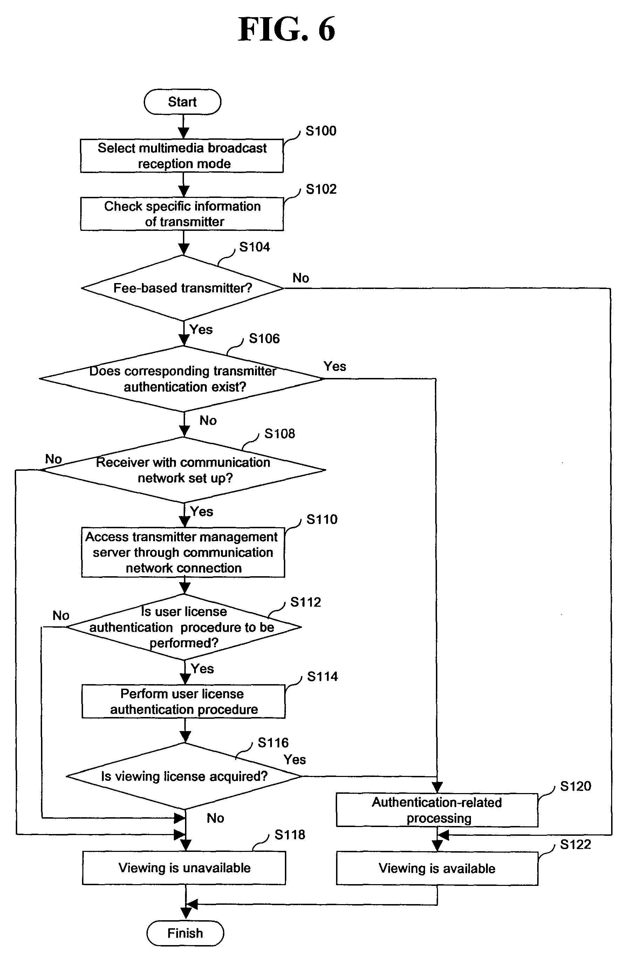

FIG. 6 is a flow diagram illustrating a viewing method for a broadcasting terminal, according to an embodiment of the present invention.

Referring to FIG. 6, when a user selects a multimedia broadcast mode (e.g., DMB reception mode) in order to view DMB, and then starts DMB reception, or moves his or her position while already receiving DMB, a signal transmitted by a fee-based transmitter may be received. Thus, the DMB terminal may periodically check identifier information (e.g., TII) of transmitters inserted into a received signal (S102). The identifier information may have specific rules such that the fee-based transmitter and other transmitters are distinguishable from each other at the time of assignment. For example, the identifier information of the fee-based transmitter may begin with "10", and other transmitters may be assigned no identifier information, for example, such that the terminal may determine whether a currently received broadcast is sent from a fee-based transmitter. If broadcast signals sent from the fee-based transmitter as well as broadcast signals sent from the free transmitter are received, the broadcast sent by the fee-based transmitter may be received only when the ratio of broadcast signals sent by the fee-based transmitter to broadcast signals sent by the free transmitter is less than a predetermined ratio.

When the identifier information is determined to be identifier information transmitted from the broadcasting station or free transmitter, such as "10_xx" or "10_00", the terminal displays a received broadcast signal (S104, S122). However, when the TII is determined to be identifier information transmitted from the fee-based transmitter, such as "10_10", the terminal checks if there exists authentication information for permitting viewing of a broadcast provided by the corresponding fee-based transmitter (S104, S106). The authentication information may be an authentication commonly applied to every transmitter, or an authentication applied to each individual fee-based transmitter provider, or an authentication applied to each individual fee-based transmitter.

Based on the checking for authentication, if authentication information for the corresponding transmitter is found, then authentication-related processing is performed, and the broadcast signal is displayed for viewing by the user (S106, S120, S122). However, if no authentication information for viewing a broadcast of the fee-based transmitter is found, or if only expired authentication information is found, for example, the terminal checks whether a communication network is set up (S106, S108). The communication network refers to a network which the terminal accesses for multimedia (e.g., DMB) viewing.

Based on the checking for the communication network, a terminal without a communication network set up may not view the broadcasting, and resultantly terminates operation (S118). When a terminal has a communication network set up, the terminal may automatically or manually access a fee-based transmitter management server via the corresponding communication network (S108, S110). When the terminal accesses the management server, the management server provides explanation of the types of billing and available authentication, and the user makes a desired selection to perform an authentication (e.g., billing authentication and user authentication) procedure to purchase a use license (S112). If the user fails in user authentication or rejects authentication, viewing is denied (S118). However, if the user succeeds in user authentication, the fee-based transmitter sends an information message requesting download of the authentication information or an update of the existing authentication information to enable viewing of a transmitted DMB service. The terminal then downloads the authentication information and/or updates existing authentication information via the information message, thereby performing a user license authentication procedure (S114).

After performance of the user license authentication procedure, when the viewing license is acquired for the terminal, the terminal performs authentication-related processing, and resultantly the terminal becomes capable of viewing the broadcasting (S116, S120, S122). The authentication-related processing refers to a process of storing changes in environment required for authentication and modifying authentication information according to specific standards. That is, in a case where authentication is not made on a permanent basis but based on a restrictive agreement in response to specific environmental changes (e.g., lapse of time, increase in number of times of broadcast reception, and/or accumulation of broadcast viewing time), authentication is changed accordingly.

The above steps (S108, S110, S112, S114) are performed for the user to acquire proper authentication information in advance on a prepaid basis and to enable viewing of the DMB transmitted by the fee-based transmitter. However, if the billing basis is changed to a pay-later basis, the DMB terminal may calculate the elapsed time of viewing of the DMB transmitted by the fee-based transmitter, after being assigned a viewing license provided by the fee-based transmitter administrator, and then provide the license as billing information to the fee-based transmitter management server, for example, when viewing occurs or on a periodic basis. To this end, the DMB terminal may have a module for accessing the communication network. However, in a case where the DMB terminal user is in arrears with his or her bills, the fee-based transmitter administrator may prohibit further viewing by remotely changing the authentication information of the DMB terminal via the communication network.

In one embodiment, a multimedia terminal comprises a receiver adapted to receive a multimedia signal from a network transmitter, the multimedia signal including a transmitter identifier corresponding to the network transmitter. The multimedia terminal also comprises a processor operatively coupled to the receiver, adapted to evaluate the transmitter identifier included in the multimedia signal. The multimedia terminal also comprises a multimedia processor operatively coupled to the receiver and the processor, adapted to process the multimedia signal based on the evaluation of the transmitter identifier by the processor.

The evaluation of the transmitter identifier by the processor comprises determining whether the transmitter identifier may correspond to a fee-based transmitter. The multimedia terminal may further comprise a display operatively coupled to the multimedia processor, adapted to display a multimedia service associated with the multimedia signal based on the evaluation of the transmitter identifier by the processor. The processing by the multimedia processor of the multimedia signal based on the evaluation of the transmitter identifier by the processor may comprise notifying a user of the multimedia terminal that display of the multimedia service associated with the multimedia signal requires fee payment when the transmitter identifier corresponds to a fee-based transmitter.

The network transmitter may comprise a gapfiller transmitter. Alternatively, the network transmitter may comprise a broadcasting station. The multimedia terminal may further comprise a user input device operatively coupled to the processor, adapted to receive user input to control the multimedia terminal. The multimedia terminal may further comprise a transmitter unit operatively coupled to the processor, adapted to transmit a signal from the multimedia terminal to a network.

In another embodiment, a broadcasting network comprises a broadcasting station adapted to broadcast a multimedia signal. The broadcasting network also comprises a transmitter adapted to receive the multimedia signal from the broadcasting station, to attach a transmitter identifier to the multimedia signal to generate a marked multimedia signal, and to transmit the marked multimedia signal to a multimedia terminal.

The multimedia terminal may evaluate the transmitter identifier included in the marked multimedia signal, and determines whether to display a multimedia service associated with the marked multimedia signal based on the evaluation of the transmitter identifier. The broadcasting network may further comprise a management server adapted to perform authentication of the multimedia terminal to enable display of the multimedia service by the multimedia terminal. The transmitter may comprise a gapfiller transmitter. The transmitter identifier may comprise position information of the transmitter.

In yet another embodiment, a method for processing a multimedia signal in a multimedia terminal comprises receiving a multimedia signal from a network transmitter, the multimedia signal including a transmitter identifier corresponding to the network transmitter. The method also comprises evaluating the transmitter identifier included in the multimedia signal The method also comprises processing the multimedia signal based on the evaluation of the transmitter identifier by the processor.

The evaluation of the transmitter identifier by the processor may comprise determining whether the transmitter identifier corresponds to a fee-based transmitter. The method may further comprise displaying a multimedia service associated with the multimedia signal based on the evaluation of the transmitter identifier by the processor. The processing by the multimedia processor of the multimedia signal based on the evaluation of the transmitter identifier by the processor may comprise notifying a user of the multimedia terminal that display of the multimedia service associated with the multimedia signal requires fee payment when the transmitter identifier corresponds to a fee-based transmitter. The method may further comprise measuring a time during which the multimedia service associated with the multimedia signal transmitted from a fee-based transmitter is displayed on the multimedia terminal. The method may further comprise charging the user of the multimedia terminal for the display of the multimedia service based on the measured display time. The method may further comprise updating authentication information for the multimedia terminal to enable the display of the multimedia service.

In the present invention, costs incurred due to DMB service in shadow areas are charged to the user of the DMB terminal without deviating from the basic standards of terrestrial DMB, and DMB is serviced by identifying a user approved for DMB viewing in restricted areas. The provider of the DMB transmitter installed in shadow areas may thus reap profits and the user may be provided with higher quality multimedia service.

It will be apparent to those skilled in the art that various modifications and variations may be made in the present invention without departing from the spirit or scope of the inventions. Thus, it is intended that the present invention covers the modifications and variations of this invention provided they come within the scope of the appended claims and their equivalents.

## Claims

1. A multimedia terminal, comprising:
a receiver adapted to receive a multimedia signal from a network transmitter, the multimedia signal including a transmitter identifier corresponding to the network transmitter;
a processor operatively coupled to the receiver, adapted to evaluate the transmitter identifier included in the multimedia signal; and
a multimedia processor operatively coupled to the receiver and the processor, adapted to process the multimedia signal based on the evaluation of the transmitter identifier by the processor.

2. The multimedia terminal of claim 1, wherein the evaluation of the transmitter identifier by the processor comprises determining whether the transmitter identifier corresponds to a fee-based transmitter.

3. The multimedia terminal of claim 1, further comprising:
a display operatively coupled to the multimedia processor, adapted to display a multimedia service associated with the multimedia signal based on the evaluation of the transmitter identifier by the processor.

4. The multimedia terminal of claim 1, wherein the processing by the multimedia processor of the multimedia signal based on the evaluation of the transmitter identifier by the processor comprises notifying a user of the multimedia terminal that display of the multimedia service associated with the multimedia signal requires fee payment when the transmitter identifier corresponds to a fee-based transmitter.

5. The multimedia terminal of claim 1, wherein the network transmitter comprises a gapfiller transmitter.

6. The multimedia terminal of claim 1, wherein the network transmitter comprises a broadcasting station.

7. The multimedia terminal of claim 1, further comprising:
a user input device operatively coupled to the processor, adapted to receive user input to control the multimedia terminal.

8. The multimedia terminal of claim 1, further comprising:
a transmitter unit operatively coupled to the processor, adapted to transmit a signal from the multimedia terminal to a network.

9. A broadcasting network, comprising:
a broadcasting station adapted to broadcast a multimedia signal;
a transmitter adapted to receive the multimedia signal from the broadcasting station, to attach a transmitter identifier to the multimedia signal to generate a marked multimedia signal, and to transmit the marked multimedia signal to a multimedia terminal.

10. The broadcasting network of claim 9, wherein the multimedia terminal evaluates the transmitter identifier included in the marked multimedia signal, and determines whether to display a multimedia service associated with the marked multimedia signal based on the evaluation of the transmitter identifier.

11. The broadcasting network of claim 10, further comprising:
a management server adapted to perform authentication of the multimedia terminal to enable display of the multimedia service by the multimedia terminal.

12. The broadcasting network of claim 9, wherein the transmitter comprises a gapfiller transmitter.

13. The broadcasting network of claim 9, wherein the transmitter identifier comprises position information of the transmitter.

14. A method for processing a multimedia signal in a multimedia terminal, the method comprising:
receiving a multimedia signal from a network transmitter, the multimedia signal including a transmitter identifier corresponding to the network transmitter;
evaluating the transmitter identifier included in the multimedia signal; and
processing the multimedia signal based on the evaluation of the transmitter identifier by the processor.

15. The method of claim 14, wherein the evaluation of the transmitter identifier by the processor comprises determining whether the transmitter identifier corresponds to a fee-based transmitter.

16. The method of claim 14, further comprising:
displaying a multimedia service associated with the multimedia signal based on the evaluation of the transmitter identifier by the processor.

17. The method of claim 14, wherein the processing by the multimedia processor of the multimedia signal based on the evaluation of the transmitter identifier by the processor comprises notifying a user of the multimedia terminal that display of the multimedia service associated with the multimedia signal requires fee payment when the transmitter identifier corresponds to a fee-based transmitter.

18. The method of claim 14, wherein the network transmitter comprises a gapfiller transmitter.

19. The method of claim 14, further comprising:
measuring a time during which the multimedia service associated with the multimedia signal transmitted from a fee-based transmitter is displayed on the multimedia terminal.

20. The method of claim 19, further comprising:
charging the user of the multimedia terminal for the display of the multimedia service based on the measured display time.

21. The method of claim 20, further comprising:
updating authentication information for the multimedia terminal to enable the display of the multimedia service.
